# EUROPÄISCHE PATENTSCHRIFT

(11) **EP 2 933 542 B1**
(45) Veröffentlichungstag und Bekanntmachung des Hinweises auf die Patenterteilung: **16.05.2018**
(21) Anmeldenummer: 15401015.1
(22) Anmeldetag: 04.03.2015
(51) Int. Cl.: F16L 25/00, F16L 33/26

(54) **ANSCHLUSSVERBINDUNG FÜR WELLROHRE**
CONNECTION FOR CORRUGATED PIPES
DISPOSITIF DE RACCORDEMENT POUR TUYAUX ONDULÉS

(30) Priorität: 17.04.2014 DE 102014105555
(43) Veröffentlichungstag der Anmeldung: 21.10.2015
(73) Patentinhaber: Brugg Rohr AG Holding, 5200 Brugg (CH)
(72) Erfinder: Homann, Jörn, 30655 Hannover (DE); Nielinger, Helga, 31535 Neustadt (DE); Post, Marc, 31867 Hülsede (DE)
(74) Vertreter: Scheffler, Jörg

(56) Entgegenhaltungen:
- EP-A1- 0 775 865
- DE-A1- 10 245 979
- DE-A1- 10 300 417
- DE-U1-202005 001 018
- SU-A1- 896 309

## Beschreibung

Die Erfindung betrifft eine Anschlussverbindung für Wellrohre als Fluidleitung mit einem Anschlusselement, einem gegen eine Innenwandfläche des Wellrohres formschlüssig anlegbaren Stützring, einem an einer Umfangsfläche des Wellrohres axial unbeweglich festlegbaren ersten Ringelement, wobei ein Abschnitt des Wellrohres zwischen dem Stützring und dem ersten Ringelement eingeschlossen und axial unbeweglich festlegbar ist und wobei eine in einem Übergangsbereich zwischen dem Stützring und dem Wellrohr umfangsseitig eingeschlossene ringförmige Dichtkammer ein Dichtelement aufnimmt, welches in einer durch ein Fixierelement festlegbaren Funktionsstellung mit einer Verformungskraft belastet ist, wobei ein zweites Ringelement, welches das Anschlusselement umfangsseitig einschließt und gegenüber diesem umfangsseitig anlegbar sowie translatorisch beweglich ist, wobei das erste Ringelement und das zweite Ringelement koaxial zueinander angeordnet sind, sodass eine Außenumfangsfläche des einen Ringelementes in einem Kontaktbereich gegen eine Innenumfangsfläche des anderen Ringelementes anliegt und die Ringelemente entlang einer durch den Kontaktbereich gebildeten Schiebeführung relativ zueinander translatorisch beweglich sind, wobei das Dichtelement durch die relative translatorische Bewegung der Ringelemente in der Dichtkammer komprimierbar ist und die dieser Funktionsstellung entsprechende Relativposition der Ringelemente durch das Fixierelement festlegbar ist und wobei der Stützring mit dem Anschlusselement einteilig verbunden ist.

Eine gattungsgemäße Anschlussverbindung ist beispielsweise aus der EP 0 775 865 B1 bekannt, die sich auf eine Anordnung zum Verbinden eines Wellrohres mit einem Anschlusselement bezieht. Die Anschlussverbindung hat einen in das Wellrohr einschraubbaren Stützring, dessen Ende aus dem Wellrohr herausragt. Auf das Wellrohr ist ein als Druckring ausgeführtes Ringelement so weit aufgeschraubt, dass das Ende des Wellrohres hinausragt. Das Anschlusselement bildet mit dem Druckring eine Dichtkammer, in welcher ein Dichtring aus Graphit angeordnet ist. Der Dichtring wird durch axiales Gegenziehen von Druckring und Anschlusselement umgeformt und komprimiert. Hierzu dienen Schraubbolzen oder, wenn keine Schraubbolzen eingesetzt werden, ein gesondertes Werkzeug. Bei dieser Variante erfolgt die Fixierung des komprimierten Zustandes dadurch, dass das Anschlusselement den Druckring überragt und das überragende Ende umgeformt wird. Alternativ können ein oder mehrere Stifte als Fixierelemente den Druckring gegenüber dem Anschlusselement festlegen.

Die EP 1 457 726 B1 bezieht sich ebenfalls auf das Anbringen einer solchen Anschlussverbindung an einem schraubenlinienförmig gewellten Metallrohr, bei dem in das Ende des Metallrohres ein Stützring so weit eingeschraubt wird, dass ein glattwandiger Bereich mit einem geringeren Außendurchmesser als die lichte Weite des Metallrohres sowohl innerhalb des Metallrohres verbleibt als auch das Ende des Metallrohres überragt, sodass ein Anschlussstück zwischen dem Metallrohr und dem Stützring eingefügt werden kann. Dadurch wird ein Dichtring aus Graphit, der am Umfang des glattwandigen Bereiches des Stützringes angeordnet ist, zwischen dem Anschlussstück und dem Druckring axial und radial umgeformt und verpresst. Hierzu ermöglichen Bohrungen im Flansch des Druckringes des Anschlussstückes ein Annähern der Flansche mittels Schraubbolzen.

Nachteilig bei den vorstehend beschriebenen Anschlussverbindungen erweist sich vor allem der hohe Fertigungsaufwand, der mit der erforderlichen geringen Toleranz im Verbindungsbereich des Stützringes gegenüber dem Anschlussstück verbunden ist. Insbesondere muss einerseits die relative Beweglichkeit gewährleistet sein, um den Dichtring in der Dichtkammer verpressen zu können, andererseits soll das Eindringen von dem Wellrohr zugeführten Fluid in den Innenraum der Dichtkammer zuverlässig ausgeschlossen werden.

Selbstverständlich ist auch bereits daran gedacht worden, den Stützring und das Anschlussstück einteilig auszuführen, was jedoch bei den Anschlussverbindungen zu einem Verzicht auf den Stützring führt, welcher wiederum für den Druckring und die zuverlässige Kraftübertragung der im Betrieb auftretenden Kräfte erforderlich ist.

Eine andere Verbindungsart für gewellte Metallrohre ist in der DE 33 02 450 C2 beschrieben. Auf das Ende eines gewellten Rohres wird eine Stützbuchse geschraubt sowie ein Rohrstutzen in das Ende des gewellten Rohres. Die Abdichtung ergibt sich dadurch, dass die lichte Weite der Stützbuchse zum Ende hin zunimmt oder der Außendurchmesser des Rohrstutzens zum Ende hin abnimmt. Beim Einschrauben des Rohrstutzens in das durch ein Formwerkzeug der Innenkontur der Außenbuchse angepasste Wellrohrende wird das Wellrohr zwischen dem Rohrstutzen und der Stützbuchse abgedichtet.

Aus der DE 40 27 818 A1 ist eine Anschlussarmatur für Wellrohre bekannt, die eine auf das Wellrohrende aufgeschraubte Außenbuchse mit einem das Wellrohrende überragenden Glattrohransatz aufweist. Der Glattrohransatz besitzt ein Innengewinde, in welches ein Anschlussrohrstück eingeschraubt wird. Das Anschlussrohrstück dringt mit einem abgestuften Ende in das Wellrohr ein. Beim Einschrauben des Anschlussrohrstückes wird die Wellung des Wellrohres am Ende gestaucht. Die Abdichtung erfolgt durch eine in die letzten Wellengänge eingelegte Dichtungsschnur aus Graphit, die beim Stauchen der Wellung verformt und gegen die Innenwandung der Außenbuchse und das in das Wellrohrende eingedrungene abgestufte Ende des Rohrstutzens gepresst wird.
Aus der DE 33 41 297 C2 ist eine Dichtpackung zum Abdichten von Wellrohren bekannt, die aus zwei auf dem Wellrohr angeordneten gegeneinander bewegbaren und ineinanderfassenden Buchsen besteht, zwischen welchen ein das Wellrohr umfassender Ringraum zur Aufnahme einer Dichtmasse aus Graphit gebildet wird. Es ist eine sich von innen an den Dichtbereich anlegende Wellrohrhülse vorgesehen.
Die DE 20 2005 001 018 U1 betrifft eine Verbindung des Endes eines schraubenlinienförmig gewellten Metallrohres mit einem Anschlussstück. Als alternatives Fixiermittel für die verwendeten Ringelemente werden Sprengringe erwähnt. Die DE 103 00 417 A1 betrifft eine Verbindung aus Leitungsrohren, die aus zwei koaxialen schraubenlinienförmig gewellten Metallrohren bestehen, wobei ein Konusring als zweites Ringelement zum Einsatz kommt.
Ferner ist aus der CH 589 249 A5 bekannt, das Ende eines gewellten Metallrohres gegen die Innenfläche eines Flansches zu walzen, wobei die Wellung eingeebnet wird. Durch den beim Walzen anstehenden hohen Anpressdruck entsteht zwischen dem ehemals gewellten Metallrohr und dem Metallflansch eine dichte Pressverbindung. Diese Art der Verbindung erfordert einen hohen apparativen Aufwand an der Montagestelle und setzt dickwandige Formteile voraus.
Ausgehend von diesem Stand der Technik liegt der Erfindung die Aufgabe zugrunde, eine zugleich einfach herzustellende und im Betrieb zuverlässige Anschlussverbindung zu schaffen, die problemlos zu montieren ist und bei der das Eindringen von zugeführtem Fluid in den Dichtungsraum und Beeinträchtigungen der Fluidströmung innerhalb des Wellrohres zuverlässig ausgeschlossen sind.
Diese Aufgabe wird erfindungsgemäß durch eine Anschlussverbindung gemäß den Merkmalen des Anspruches 1 gelöst. Die weitere Ausgestaltung der Erfindung ist den Unteransprüchen zu entnehmen.

Erfindungsgemäß greift bei der Anschlussverbindung in der Funktionsstellung der Ringelemente ein als Sicherungsring ausgeführtes Fixierelement zugleich in eine Nut in der Außenumfangsfläche des ersten Ringelementes und in eine weitere Nut in der Innenumfangsfläche des zweiten Ringelementes formschlüssig ein, wobei die Ringelemente in der Funktionsstellung durch das Fixierelement unlösbar verbunden sind und dass die Innenumfangsfläche und/oder die Außenumfangsfläche einen konischen oder kalottenförmigen Abschnitt aufweist, durch den das Fixierelement aufgrund der translatorischen Relativbewegung der Ringelemente entgegen seiner elastischen Rückstellkraft des Fixierelementes in die Nut des ersten Ringelementes gepresst wird und bei Erreichen der fluchtenden Position der beiden Nuten selbsttätig hervorspringt. Durch diese Gestaltung kommt es also aufgrund der Verschiebung der Ringelemente gegeneinander entweder zu einer Komprimierung oder zu einer Aufweitung des Fixierelementes, die bei Erreichen der Sollposition in der Funktionsstellung zu einer selbsttätigen formschlüssigen Verbindung durch Hinterschneidung in einer Ringnut führt. Ein zusätzliches Werkzeug zur Verformung des Fixierelementes ist dabei ebenso wenig erforderlich wie ein zusätzlicher Arbeitsschritt. Auf diese Weise werden die Ringelemente in der Funktionsstellung durch das Fixierelement unlösbar verbunden, um deren beschädigungsfreie Trennung zu verhindern. Diese Gestaltung erweist sich insbesondere bei sicherheitsrelevanten Leitungsverbindungen als besonders sinnvoll.
Dabei ist der Stützring mit dem Anschlusselement einteilig verbunden und die Fixierung des Wellrohres an der Anschlussverbindung und die Dichtung durch die beiden Ringelemente realisiert. Hierdurch entfällt zunächst einmal eine Teilungsebene im Inneren des Anschlusselementes, welche beim Stand der Technik einerseits aufwendige Maßnahmen zur Abdichtung erfordert und andererseits oftmals mit einer Sprungstelle bezogen auf den Leitungsquerschnitt, insbesondere also mit einer sprunghaften Querschnittsänderung, verbunden ist, welche zu Strömungs- bzw. Druckverlusten führt. Zugleich entfällt erfindungsgemäß auch eine gesonderte Abdichtung der Dichtkammer gegenüber dem durch das Wellrohr fließenden Fluid, weil die Abdichtung auf den umfangsseitigen Übergangsbereich des Wellrohres an dem Stützring beschränkt ist, welcher besonders einfach abzudichten ist. Aber nicht nur die erfindungsgemäß gegenüber dem Stand der Technik fehlende Teilungsebene und die damit entfallende Abdichtung begründen den besonders vorteilhaften technischen Einsatz der Anschlussverbindung. Vielmehr ergeben sich daraus weitere besondere Vorteile. Erfindungsgemäß wird nämlich bei der Fixierung der Anschlussverbindung und dem Verpressen des Dichtelementes das Anschlusselement nicht gegenüber dem Wellrohr verlagert, also axial verschoben. Dadurch entfällt das beim Stand der Technik auftretende Problem, dass das Anschlussstück nach dem Verpressen der Dichtung verkürzt ist. Diese Verkürzung kann beim Stand der Technik vor allem deswegen zu Problemen führen, weil die Verbindung nicht lösbar ist, also in der Länge nicht mehr variiert oder angepasst werden kann. Vielmehr kann erfindungsgemäß auch dann die Dichtung durch das Verpressen des Dichtelementes zuverlässig vorgenommen werden, wenn das Anschlusselement schlecht oder überhaupt nicht zugänglich ist, weil erfindungsgemäß hierzu lediglich die beiden Ringelemente gegeneinander verschoben werden. Somit wird beim Verpressen auch keinerlei Kraft in Längsrichtung auf das Wellrohr oder das Anschlussstück übertragen, die dadurch spannungsfrei bleiben. Die Anpassung und Einhaltung vorbestimmter Solllängen der mit dem Wellrohr verbundenen Anschlussverbindung wird erfindungsgemäß wesentlich erleichtert, wobei das Erreichen der Funktionsstellung zudem in einfacher Weise visuell überprüft werden kann. Darüber hinaus wird eine besonders kompakte und leicht herzustellende, insbesondere unlösbare Verbindung erzeugt, bei der das Dichtelement im Kraftnebenschluss angeordnet ist, sodass die Dichtung und damit die Dichtwirkung von einer äußeren oder einer thermischen Belastung des vorzugsweise wendelgewellten Wellrohres unbeeinträchtigt ist.
Vorzugsweise ist die Dichtkammer in einem Übergangsbereich diesen überbrückend zwischen dem Wellrohr und einem Umfangsbereich des Anschlusselementes gebildet, sodass das Dichtelement zugleich gegen das Wellrohr und das Anschlusselement diese gegeneinander abdichtend anliegt.

Indem die Ringelemente durch das einen Sicherungsring aufweisende, in dem Kontaktbereich zwischen der Außenumfangsfläche des einen Ringelementes und der Innenumfangsfläche des anderen Ringelementes angeordnete Fixierelement in einer vorbestimmten Relativposition unlösbar festlegbar sind, wird eine schnelle und zuverlässige Fixierung der beiden Ringelemente erreicht, wobei das Fixierelement zudem gegenüber Umwelteinflüssen ebenso wie Manipulationsversuchen optimal geschützt ist. Außerdem wird so eine schlanke und umfangsseitig glatte, vorzugsweise zylindrische Bauform realisiert, welche das Verlegen des so angeschlossenen Wellrohres wesentlich vereinfacht.
Erfindungsgemäß kann das an dem Wellrohr festgelegte Ringelement alternativ das andere Ringelement außenseitig einschließen oder wird umgekehrt von diesem außenseitig umfasst. Besonders vorteilhaft ist es jedoch, wenn das erste Ringelement an dem Wellrohr fixierbar ist, weil dadurch zwei hülsenförmige Ringelemente mit annähernd gleicher Materialstärke realisierbar sind, die insbesondere einer überstimmenden thermischen Dehnung unterworfen und zudem kostengünstig herstellbar sind.

Die Dichtkammer ist von einem der Ringelemente umfangsseitig radial und von jeweils einer Stirnfläche der beiden Ringelemente in jeweils einer Achsrichtung begrenzt. Besonders bevorzugt ist die Dichtkammer in axialer Richtung durch jeweils eine gegenüber der Querschnittsebene geneigte Fläche der beiden Ringelemente begrenzt, die somit zu einer gerichteten Verdrängung und Kompression in einer radial nach innen weisenden Richtung führt. Das Dichtelement wird so also gezielt gegen den Übergangsbereich zwischen dem Wellrohr und dem Stützring gepresst, wodurch die Dichtwirkung weiter verbessert wird.

Die Anschlussverbindung ist nicht auf ein einziges Anschlusselement beschränkt. Vielmehr kann die Anschlussverbindung auch zur Verbindung mehrerer Wellrohre oder als ein Verzweigungselement ausgeführt sein, indem die Anschlussverbindung zur Verbindung von zumindest zwei Wellrohren mit mehreren Stützringen und mehreren Paaren von ersten und zweiten Ringelementen ausgestattet ist. Selbstverständlich ist dadurch eine Variante nicht ausgeschlossen, bei welcher das Anschlusselement als ein einfacher Rohrstutzen, beispielsweise zum Anschluss mittels einer Schweißverbindung, ausgeführt ist.

Die Ringelemente können in Bezug auf ihre axiale Länge unterschiedlich bemessen sein. Besonders praxisgerecht ist es jedoch, wenn die Ringelemente in der Funktionsstellung jeweils eine in einer gemeinsamen Querschnittsebene der Anschlussverbindung angeordnete Stirnfläche aufweisen, sodass bei der Montage der Anschlussverbindung durch die Überprüfung der beiden Stirnflächen die gewünschte Sollposition entsprechend einer gemeinsamen Abschlussebene in einfacher Weise durch visuelle Prüfung sichergestellt werden kann.

Die Dichtungswirkung kann auf den Bereich des den Stützring bildenden Abschnittes des Anschlusselementes beschränkt werden, um die gewünschte Funktionsfähigkeit der Anschlussverbindung zu gewährleisten. Besonders sinnvoll ist darüber hinaus noch eine Variante, bei welcher das zweite Ringelement umfangsseitig gegenüber dem Anschlusselement insbesondere dichtend anlegbar ist, um so eine weiter verbesserte Dichtung zu erreichen.

Weiterhin ist es von Vorteil, wenn das zweite Ringelement mit dem Anschlusselement und/oder dem ersten Ringelement drehfest verbunden ist. Hierdurch wird verhindert, dass das Anschlusselement mit dem Stützring relativ zu den Ringelementen verdreht und damit aus dem Wellrohr herausgeschraubt werden kann. Für eine solche drehfeste Verbindung eignet sich beispielsweise eine parallel zur Längsachse verlaufende Ausformung nach Art einer Passfeder oder einer Keilnut.

Die Dichtung kann an die jeweiligen Einsatzzwecke problemlos angepasst werden, ohne dass hierzu die konstruktive Ausgestaltung geändert werden muss. Besonders sinnvoll ist es jedoch, wenn das Dichtelement ein Dichtring mit einem wesentlichen Materialanteil aus Graphit ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer geschnittenen Seitenansicht in
- Fig. 1: eine Anschlussverbindung, bei der ein inneres Ringelement an einem Wellrohr fixiert ist;
- Fig. 2: eine modifizierte Anschlussverbindung gemäß Figur 1 zur Verbindung von zwei Wellrohren;
- Fig. 3: eine Variante einer Anschlussverbindung, bei der ein äußeres Ringelement an dem Wellrohr fixiert ist.

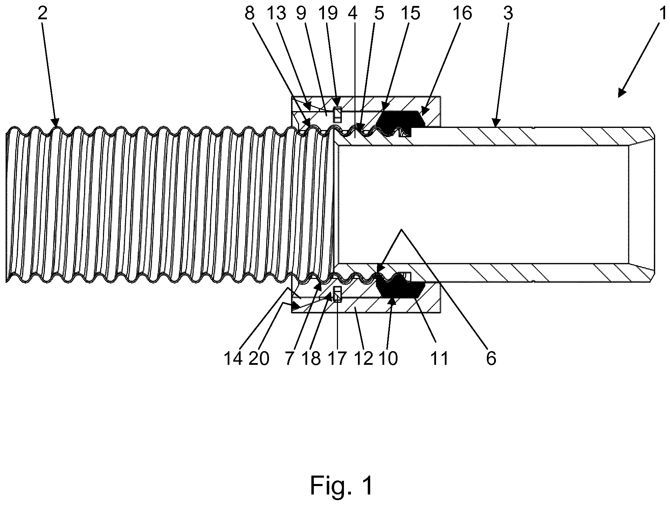

Figur 1 zeigt in einer geschnittenen Seitenansicht eine Anschlussverbindung 1 für Wellrohre 2, die mit einem Anschlusselement 3 für einen nicht gezeigten Anschluss beispielsweise an ortsfeste Elemente ausgestattet ist. Das Anschlusselement 3 ist einteilig mit einem Stützring 4 verbunden, welcher durch einen mit einem Außengewinde 5 ausgestatteten Abschnitt des Anschlusselementes 3 gebildet ist. Dieser den Stützring 4 bildende Abschnitt liegt gegen eine Innenwandfläche 6 des Wellrohres 2 formschlüssig an, indem dieser in das Wellrohr 2 eingeschraubt wird. An einer Umfangsfläche 7 des Wellrohres 2 ist ein mit einem entsprechenden Innengewinde 8 ausgestattetes erstes Ringelement 9 festgelegt, wobei ein Endabschnitt des Wellrohres 2 zwischen dem Stützring 4 und dem ersten Ringelement 9 eingeschlossen und dadurch fixiert ist. Hierdurch wird die im Betrieb auftretende Kraft von dem Wellrohr 2 mittels des ersten Ringelementes 9 auf den Stützring 4 und somit auf das Anschlusselement 3 übertragen. Zusätzlich ist an der Anschlussverbindung 1 in einem Übergangsbereich zwischen dem Stützring 4 und dem Wellrohr 2 umfangsseitig eine ringförmige Dichtkammer 10 vorgesehen, die ein Dichtelement 11 aufnimmt. Das Dichtelement 11 ist als ein Graphitring ausgeführt und wird durch ein zweites Ringelement 12 in der Dichtkammer um ca. 20 % bis 40 % komprimiert. Hierzu schließt das zweite Ringelement 12 sowohl das Anschlusselement 3 als auch das erste Ringelement 9 umfangsseitig ein und ist gegenüber diesen translatorisch beweglich. Indem also eine Außenumfangsfläche 13 des ersten Ringelementes 9 in einem Kontaktbereich gegen eine Innenumfangsfläche 14 des zweiten Ringelementes 12 anliegt und die Ringelemente 9, 12 entlang einer durch den Kontaktbereich gebildeten Schiebeführung relativ zueinander translatorisch bewegt werden, wird das Dichtelement 11 in der Dichtkammer 10 mittels einander gegenüberliegender geneigter Flächen 15, 16 der beiden Ringelemente 9, 12 komprimiert und die gewünschte Abdichtung erreicht. In dieser Funktionsstellung der Ringelemente 9, 12 greift ein als Sicherungsring ausgeführtes Fixierelement 17 zugleich in einer Nut 18 in der Außenumfangsfläche 13 des ersten Ringelementes 9 und in eine weitere Nut 19 in der Innenumfangsfläche 14 des zweiten Ringelementes12 ein und bildet so eine formschlüssige unlösbare Verbindung. Hierzu hat die Innenumfangsfläche 14 des zweiten Ringelementes 12 einen konischen Abschnitt 20, durch den das Fixierelement 17 aufgrund der translatorischen Relativbewegung der Ringelemente 9, 12 entgegen einer elastischen Rückstellkraft des Fixierelementes 17 in die Nut 18 des ersten Ringelementes 9 gepresst wird und bei Erreichen der fluchtenden Position der beiden Nuten 18, 19 selbsttätig hervorspringt.

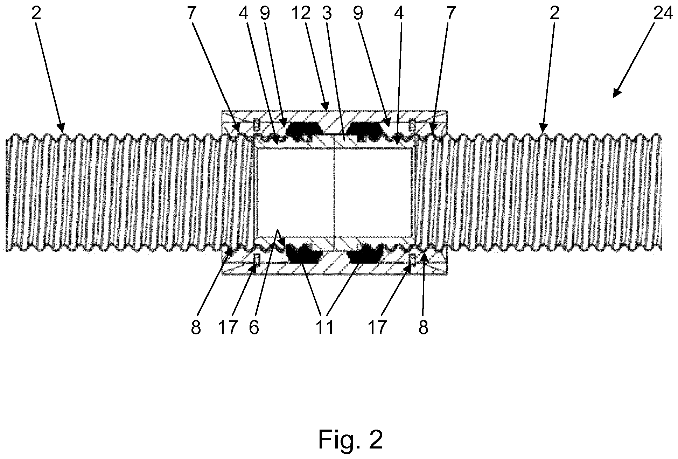

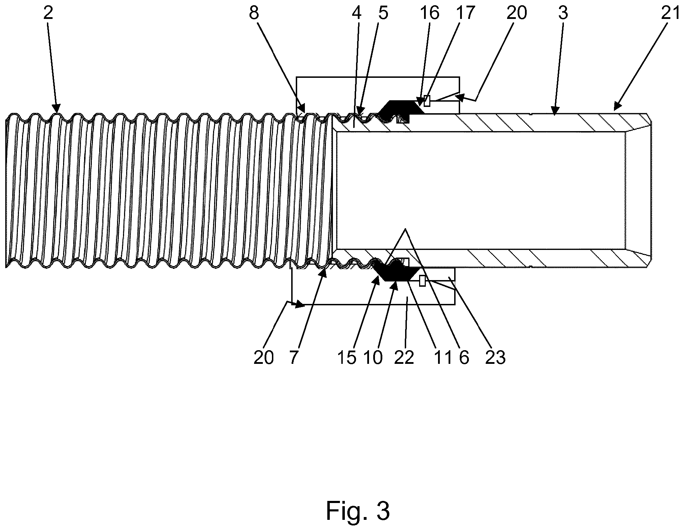

In Figur 2 ist eine Variante einer als Rohrkupplung ausgeführten Anschlussverbindung 24 in einer geschnittenen Ansicht dargestellt, durch die zwei baugleiche Wellrohre 2 miteinander verbunden sind. Das Anschlusselement 3 ist an beiden Endabschnitten einteilig mit einem durch einen jeweiligen Endabschnitt gebildeten Stützring 4 verbunden. Dieser den Stützring 4 bildende Abschnitt liegt gegen eine Innenwandfläche 6 des Wellrohres 2 formschlüssig an, indem dieser in das Wellrohr 2 eingeschraubt wird. An einer Umfangsfläche 7 der beiden Wellrohre 2 ist jeweils ein mit einem entsprechenden Innengewinde 8 ausgestattetes erstes Ringelement 9 festgelegt, wobei ein Endabschnitt des Wellrohres 2 zwischen dem Stützring 4 und dem ersten Ringelement 9 eingeschlossen und dadurch fixiert ist. Ein die beiden ersten Ringelemente 9 sowie das Anschlusselement 3 umfangsseitig einschließendes zweites Ringelement 12 ist gegenüber diesen translatorisch beweglich. Zur Montage werden die beiden Wellrohre 2 mit dem jeweiligen Stützring 4 und dem ersten Ringelement 9 nach dem Einfügen des Dichtelementes 11 von gegenüberliegenden Seiten in das zweite Ringelement 12 eingeführt. In dieser Funktionsstellung der Ringelemente 9, 12 greift jeweils ein als Sicherungsring ausgeführtes Fixierelement 17 in die dabei gegenüberliegenden Nuten der Ringelemente 9, 12 formschlüssig ein und bildet so eine zuverlässige und mechanisch hoch belastbare Verbindung.
In der in Figur 3 gezeigten Variante einer Anschlussverbindung 21 ist demgegenüber ein an dem Wellrohr 2 fixiertes erstes Ringelement 22 größer als ein zweites Ringelement 23.

Dadurch wird das zweite Ringelement 23 zwischen dem ersten Ringelement 22 und dem Anschlusselement 3 in die von diesen begrenzte Ringnut eingesetzt. Die Dichtkammer 10 wird somit durch das Einschieben des zweiten Ringelementes 23 in das erste Ringelement 22 reduziert und das Dichtelement 11 dadurch komprimiert.

## Patentansprüche

1. Anschlussverbindung (1, 21, 24) für Wellrohre (2) mit einem Anschlusselement (3), einem gegen eine Innenwandfläche (6) des Wellrohres (2) formschlüssig anlegbaren Stützring (4), einem an einer Umfangsfläche (7) des Wellrohres (2) axial festlegbaren ersten Ringelement (9, 22), wobei ein Abschnitt des Wellrohres (2) zwischen dem Stützring (4) und dem ersten Ringelement (9, 22) eingeschlossen und axial unbeweglich festlegbar ist und wobei eine in einem Übergangsbereich zwischen dem Stützring (4) und dem Wellrohr (2) umfangsseitig eingeschlossene ringförmige Dichtkammer (10) ein Dichtelement (11) aufnimmt, welches in einer durch ein Fixierelement (17) der Anschlussverbindung (1, 21, 24) festlegbaren Funktionsstellung mit einer Verformungskraft belastet ist, wobei ein zweites Ringelement (12, 23), welches das Anschlusselement (3) umfangsseitig einschließt und gegenüber diesem umfangsseitig anlegbar sowie translatorisch beweglich ist, wobei das erste Ringelement (9, 22) und das zweite Ringelement (12, 23) koaxial zueinander angeordnet sind, sodass eine Außenumfangsfläche (13) des einen Ringelementes (9, 23) in einem Kontaktbereich gegen eine Innenumfangsfläche (14) des anderen Ringelementes (12, 22) anliegt und die Ringelemente (9, 12, 22, 23) entlang einer durch den Kontaktbereich gebildeten Schiebeführung relativ zueinander translatorisch beweglich sind, wobei das Dichtelement (11) durch die relative translatorische Bewegung der Ringelemente (9, 12, 22, 23) in der Dichtkammer (10) komprimierbar ist und die dieser Funktionsstellung entsprechende Relativposition der Ringelemente (9, 12, 22, 23) durch das Fixierelement (17) festlegbar ist, und wobei der Stützring (4) mit dem Anschlusselement (3) einteilig verbunden ist, **dadurch gekennzeichnet, dass** in der Funktionsstellung der Ringelemente (9, 12) ein als Sicherungsring ausgeführtes Fixierelement (17) zugleich in eine Nut (18) in der Außenumfangsfläche (13) des ersten Ringelementes (9) und in eine weitere Nut (19) in der Innenumfangsfläche (14) des zweiten Ringelementes (12) formschlüssig eingreift und die Ringelemente (9, 12, 22, 23) in der Funktionsstellung durch das Fixierelement (17) unlösbar verbunden sind und dass die Innenumfangsfläche und/oder die Außenumfangsfläche (13) einen konischen oder kalottenförmigen Abschnitt (20) aufweist, durch den das Fixierelement (17) aufgrund der translatorischen Relativbewegung der Ringelemente (9, 12, 22, 23) entgegen reiner elastischen Rückstellkraft des Fixierelementes (17) in die Nut (18) des ersten Ringelementes (9) gepresst wird und bei Erreichen der fluchtenden Position der beiden Nuten (18, 19) selbsttätig hervorspringt.

2. Anschlussverbindung (1, 21, 24) nach Anspruch 1, **dadurch gekennzeichnet, dass** das erste Ringelement (9, 22) an dem Wellrohr (2) fixierbar ist.

3. Anschlussverbindung (1, 21, 24) nach zumindest einem der vorhergehenden Ansprüche, **dadurch gekennzeichnet, dass** die Dichtkammer (10) in axialer Richtung durch jeweils eine gegenüber der Querschnittsebene geneigte Fläche (15, 16) der beiden Ringelemente (9, 12, 22, 23) begrenzt ist.

4. Anschlussverbindung (24) nach zumindest einem der vorhergehenden Ansprüche, **dadurch gekennzeichnet, dass** die Anschlussverbindung (24) zur Verbindung von zumindest zwei Wellrohren (2) mit mehreren Stützringen (4) und mehreren Paaren von ersten und zweiten Ringelementen (9, 12) ausgestattet ist.

5. Anschlussverbindung (1, 21, 24) nach zumindest einem der vorhergehenden Ansprüche, **dadurch gekennzeichnet, dass** die Ringelemente (9, 12, 22, 23) in der Funktionsstellung jeweils eine in einer gemeinsamen Querschnittsebene der Anschlussverbindung (1, 21, 24) angeordnete Stirnfläche aufweisen.

6. Anschlussverbindung (1) nach zumindest einem der vorhergehenden Ansprüche, **dadurch gekennzeichnet, dass** das zweite Ringelement (12) gegenüber dem Anschlusselement (3) dichtend anlegbar ist.

7. Anschlussverbindung (1, 21, 24) nach zumindest einem der vorhergehenden Ansprüche, **dadurch gekennzeichnet, dass** das zweite Ringelement (12, 23) mit dem Anschlusselement (3) und/oder dem ersten Ringelement (9, 22) drehfest verbunden ist.

8. Anschlussverbindung (1, 21, 24) nach zumindest einem der vorhergehenden Ansprüche, **dadurch gekennzeichnet, dass** das Dichtelement (11) ein Dichtring mit einem wesentlichen Materialanteil aus Graphit ist.

## Claims

1. Coupling connection (1, 21, 24) for corrugated pipes (2) having a coupling element (3), a supporting ring (4) which can be applied in a form-fitting manner against an inner wall surface (6) of the corrugated pipe (2), a first ring element (9, 22) which can be axially secured to a circumferential surface (7) of the corrugated pipe (2), wherein a portion of the corrugated pipe (2) is enclosed between the supporting ring (4) and the first ring element (9, 22) and can be secured in an axially immovable manner, and wherein an annular sealing chamber (10), which is circumferentially enclosed in a transition region between the supporting ring (4) and the corrugated pipe (2), receives a sealing element (11) which is loaded by a deformation force in a functional position which can be fixed by a fixing element (17) of the coupling connection (1, 21, 24), wherein a second ring element (12, 23), which circumferentially encloses the coupling element (3) and can be applied circumferentially with respect thereto and is translationally movable, wherein the first ring element (9, 22) and the second ring element (12, 23) are arranged coaxially to one another, with the result that an outer circumferential surface (13) of the one ring element (9, 23) bears in a contact region against an inner circumferential surface (14) of the other ring element (12, 22), and the ring elements (9, 12, 22, 23) are movable translationally relative to one another along a sliding guide formed by the contact region, wherein the sealing element (11) can be compressed in the sealing chamber (10) by the relative translational movement of the ring elements (9, 12, 22, 23), and the relative position of the ring elements (9, 12, 22, 23) that corresponds to this functional position can be fixed by the fixing element (17), and wherein the supporting ring (4) is connected in one piece to the coupling element (3), **characterized in that,** in the functional position of the ring elements (9, 12), a fixing element (17) configured as a securing ring simultaneously engages in a form-fitting manner in a groove (18) in the outer circumferential surface (13) of the first ring element (9) and in a further groove (19) in the inner circumferential surface (14) of the second ring element (12), and the ring elements (9, 12, 22, 23) in the functional position are non-releasably connected by the fixing element (17), and **in that** the inner circumferential surface and/or the outer circumferential surface (13) have/has a conical or dome-shaped portion (20) by means of which the fixing element (17), as a result of the translational relative movement of the ring elements (9, 12, 22, 23), is pressed into the groove (18) of the first ring element (9) counter to an elastic restoring force of the fixing element (17) and projects automatically upon reaching the aligned position of the two grooves (18, 19).

2. Coupling connection (1, 21, 24) according to Claim 1, **characterized in that** the first ring element (9, 22) can be fixed to the corrugated pipe (2).

3. Coupling connection (1, 21, 24) according to at least one of the preceding claims, **characterized in that** the sealing chamber (10) is delimited in the axial direction by a respective surface (15, 16) of the two ring elements (9, 12, 22, 23) that is inclined with respect to the cross-sectional plane.

4. Coupling connection (24) according to at least one of the preceding claims, **characterized in that** the coupling connection (24) for connecting at least two corrugated pipes (2) is equipped with a plurality of supporting rings (4) and a plurality of pairs of first and second ring elements (9, 12).

5. Coupling connection (1, 21, 24) according to at least one of the preceding claims, **characterized in that** the ring elements (9, 12, 22, 23) in the functional position each have an end face arranged in a common cross-sectional plane of the coupling connection (1, 21, 24).

6. Coupling connection (1) according to at least one of the preceding claims, **characterized in that** the second ring element (12) can be applied sealingly with respect to the coupling element (3).

7. Coupling connection (1, 21, 24) according to at least one of the preceding claims, **characterized in that** the second ring element (12, 23) is connected to the coupling element (3) and/or the first ring element (9, 22) in a rotationally fixed manner.

8. Coupling connection (1, 21, 24) according to at least one of the preceding claims, **characterized in that** the sealing element (11) is a sealing ring having a substantial material fraction composed of graphite.

## Revendications

1. Dispositif de raccordement (1, 21, 24) pour tuyaux ondulés (2), comprenant un élément de raccordement (3), une bague de support (4) pouvant être appliquée par engagement par correspondance de formes contre une surface de paroi interne (6) du tuyau ondulé (2), un premier élément annulaire (9, 22) pouvant être fixé axialement contre une surface périphérique (7) du tuyau ondulé (2), une portion du tuyau (2) étant enfermée entre la bague de support (4) et le premier élément annulaire (9, 22) et pouvant être fixée de manière immobile axialement et une chambre d'étanchéité (10) de forme annulaire enfermée du côté périphérique dans une région de transition entre la bague de support (4) et le tuyau ondulé (2) recevant un élément d'étanchéité (11) qui, dans une position fonctionnelle pouvant être fixée par un élément de fixation (17) du dispositif de raccordement (1, 21, 24), est sollicité avec une force de déformation, un deuxième élément annulaire (12, 23), qui enferme du côté périphérique l'élément de raccordement (3) et qui peut être appliqué du côté périphérique contre celui-ci et qui peut être déplacé en translation, le premier élément annulaire (9, 22) et le deuxième élément annulaire (12, 23) étant disposés coaxialement l'un à l'autre, de sorte qu'une surface périphérique extérieure (13) de l'un des éléments annulaires (9, 23) s'applique dans une région de contact contre une surface périphérique intérieure (14) de l'autre élément annulaire (12, 22) et que les éléments annulaires (9, 12, 22, 23) puissent être déplacés en translation l'un par rapport à l'autre le long d'un guide coulissant formé par la région de contact, l'élément d'étanchéité (11) pouvant être comprimé par le déplacement en translation relatif des éléments annulaires (9, 12, 22, 23) dans la chambre d'étanchéité (10) et la position relative des éléments annulaires (9, 12, 22, 23) correspondant à cette position fonctionnelle pouvant être fixée par l'élément de fixation (17), et la bague de support (4) étant connectée d'une seule pièce à l'élément de raccordement (3), **caractérisé en ce que,** dans la position fonctionnelle des éléments annulaires (9, 12), un élément de fixation (17) réalisé sous forme de bague de fixation vient en prise par engagement par correspondance de formes en même temps dans une rainure (18) dans la surface périphérique extérieure (13) du premier élément annulaire (9) et dans une rainure supplémentaire (19) dans la surface périphérique intérieure (14) du deuxième élément annulaire (12) et les éléments annulaires (9, 12, 22, 23) sont connectés de manière inamovible dans la position fonctionnelle par l'élément de fixation (17) et **en ce que** la surface périphérique intérieure et/ou la surface périphérique extérieure (13) présentent une portion conique ou en forme de calotte (20) par laquelle l'élément de fixation (17), du fait du mouvement de translation relatif des éléments annulaires (9, 12, 22, 23) à l'encontre d'une force de rappel élastique de l'élément de fixation (17), est pressé dans la rainure (18) du premier élément annulaire (9) et une fois que les deux rainures (18, 19) sont dans la position alignée, ressort élastiquement automatiquement.

2. Dispositif de raccordement (1, 21, 24) selon la revendication 1, **caractérisé en ce que** le premier élément annulaire (9, 22) peut être fixé au tuyau ondulé (2).

3. Dispositif de raccordement (1, 21 24) selon au moins l'une quelconque des revendications précédentes, **caractérisé en ce que** la chambre d'étanchéité (10) est limitée dans la direction axiale à chaque fois par une surface (15, 16) des deux éléments annulaires (9, 12, 22, 23), inclinée par rapport au plan en section transversale.

4. Dispositif de raccordement (24) selon au moins l'une quelconque des revendications précédentes, **caractérisé en ce que** le dispositif de raccordement (24) est prévu pour connecter au moins deux tuyaux ondulés (2) avec plusieurs bagues de support (4) et plusieurs paires de premiers et deuxièmes éléments annulaires (9, 12).

5. Dispositif de raccordement (1, 21, 24) selon au moins l'une quelconque des revendications précédentes, **caractérisé en ce que** les éléments annulaires (9, 12, 22, 23) présentent, dans la position fonctionnelle, à chaque fois une surface frontale qui est disposée dans un plan commun en section transversale du dispositif de raccordement (1, 21, 24).

6. Dispositif de raccordement (1) selon au moins l'une quelconque des revendications précédentes, **caractérisé en ce que** le deuxième élément annulaire (12) peut être appliqué hermétiquement contre l'élément de raccordement (3).

7. Dispositif de raccordement (1, 21, 24) selon au moins l'une quelconque des revendications précédentes, **caractérisé en ce que** le deuxième élément annulaire (12, 23) est connecté de manière solidaire en rotation à l'élément de raccordement (3) et/ou au premier élément annulaire (9, 22).

8. Dispositif de raccordement (1, 21, 24) selon au moins l'une quelconque des revendications précédentes, **caractérisé en ce que** l'élément d'étanchéité (11) est une bague d'étanchéité avec une grande proportion de matériau en graphite.
